# EUROPÄISCHE PATENTSCHRIFT

(11) **EP 1 778 595 B1**
(45) Veröffentlichungstag und Bekanntmachung des Hinweises auf die Patenterteilung: **16.04.2008**
(21) Anmeldenummer: 05755654.0
(22) Anmeldetag: 14.06.2005
(51) Int. Cl.: C03B 18/02, C03B 18/20

(54) **VORRICHTUNG ZUR HERSTELLUNG VON FLACHGLAS NACH DEM FLOATVERFAHREN UND DICHTUNGSANORDNUNG FÜR DAS AUSTRITTSENDE EINES FLOATBADES**
DEVICE FOR THE PRODUCTION OF FLAT GLASS BY THE FLOAT METHOD AND SEAL ARRANGEMENT FOR THE OUTLET END OF A FLOAT BATH
DISPOSITIF POUR LA FABRICATION DE VERRE PLAT SELON LE PROCEDE DE FLOTTAGE ET ENSEMBLE D'ETANCHEITE PLACE A L'EXTREMITE DE SORTIE D'UN BAIN DE FLOTTAGE

(30) Priorität: 15.07.2004 DE 102004034137; 18.02.2005 DE 102005007469
(43) Veröffentlichungstag der Anmeldung: 02.05.2007
(73) Patentinhaber: Schott AG, 55122 Mainz (DE)
(72) Erfinder: KUNERT, Christian, 55252 Mainz-Kastel (DE); SCHUMACHER, Karsten, 56412 Horbach (DE); MORSTEIN, Andreas, 07743 Jena (DE); VOGL, Armin, 07751 Jena (DE); ROTERS, Andreas, 55118 Mainz (DE)
(74) Vertreter: Mehler, Klaus
(86) Internationale Anmeldenummer: PCT/EP2005/006321
(87) Internationale Veröffentlichungsnummer: WO 2006/007905

(56) Entgegenhaltungen:
- DE-A1- 2 235 947
- DE-A1- 2 716 174
- US-A- 3 507 637
- US-A- 3 615 315
- US-A- 3 674 456
- US-A- 4 692 180

## Beschreibung

Floatbäder zur Flachglaserzeugung werden bekanntlich zum Schutz des Zinns vor Oxidation in einer wasserstoffhaltigen Schutzgasatmosphäre betrieben.

Am Eintritts- und Austrittsende des Glasstranges sind Dichtungen vorgesehen, die die Schutzgasatmosphäre von der Außenatmosphäre trennen. Da die Dichtungen den Glasstrang nicht berühren dürfen, wird die Schutzgasatmosphäre unter Überdruck gehalten, so dass stets ein Strom von Schutzgas aus dem Dichtungsspalt austritt und in der Atmosphäre verbrennt. Als Dichtungen werden Spaltdichtungen verwendet, im allgemeinen mehrere hintereinander angeordnete Vorhänge ("drapes"), die als Bleche, Platten oder flexible hitzebeständige Tücher ausgebildet sind. Diese Vorhänge sind mit Mechanismen versehen, um sie in der Höhe zu verstellen oder im Falle einer Produktionsstörung schnell nach oben wegziehen zu können. So ist z. B. aus DE 1 807 582 ein solcher Vorhang gezeigt, der an seinem unteren Ende mit einem biegsamen Abdichtungsstreifen oder einer Abdichtungslasche versehen ist und auf dem Glasband schleift. Aus der US 3,607,202 sind für diesen Zweck schlaufenförmig aufgehängte Tücher (Fig. 3) aus feuerfestem Material, z. b. Asbesttuch, bekannt, die ebenfalls auf dem Gasband schleifen. Dieses Schleifen führt allerdings zu Qualitätsmängeln der Glasoberfläche, was im allgemeinen nicht tolerierbar ist.

Eine etwas ungewöhnliche Dichtung wird in GB 1 373 557 beschreiben. Hier wird ein flexibler Schlauch von innen mittels eines Gases an die Glasoberfläche gedrückt. Ein Kontakt mit dem Glasband soll dadurch vermieden werden, dass die dem Glasband zugewandte Seite des Schlauchs mit Gasaustrittsöffnungen versehen ist, durch die ein Gaspolster zwischen Schlauch und Glasband erzeugt werden soll. Bei Auftreten von Hindernissen auf dem Glasband wird der Schlauch mittels Unterdruck zusammengezogen, so dass das Hindernis die Dichtung nicht beschädigen kann. Abgesehen davon, dass die Erkennung von Hindernissen nicht immer gelingt, führt das schlagartige Vergrößern der Austrittsöffnung am Bandende durch Anlegen von Unterdruck zu schwankenden Druckverhältnissen in dem Floatbad, was der Produktqualität abträglich ist. Hindernisse, insbesondere wenn sie nur klein sind, werden häufig nicht erkannt und führen dann zu einer Beschädigung der Abdichtung, woraus eine Beschädigung des Glasbandes resultiert. Eine derartige Dichtung hat sich daher in der Praxis nicht durchsetzen können.

Es ist daher üblich, Dichtungen zu verwenden, die zu der Oberfläche des Glasbandes einen deutlichen Abstand haben, wodurch eine erhebliche Menge der Floatbadatmosphäre nach außen tritt.

Aus US-PS 3,615,315 ist eine labyrinthartige Dichtung mit Stegen aus Feuerfestmaterial (Fig. 10) bekannt, durch die der Gasaustritt verringert werden soll. Nachteilig ist, dass bei den in der Praxis verwendeten Dichtungen stets ein Gasstrom aus dem Dichtungsspalt austritt und der im Gasstrom enthaltene Wasserstoff bei Kontakt mit sauerstoffhaltiger Atmosphäre verbrennt. An der Austrittsseite des Floatbades, an der das verfestigte Glasband das Bad verlässt, bildet sich hinter dem Dichtungsspalt unmittelbar auf der Glasoberfläche eine Flamme aus. Diese schwankt während der Betriebsdauer der Anlage in Größe, Ort und Form, so dass die Glasbandoberfläche in diesem Bereich einem schwankenden, unkontrollierten Hitzeeintrag ausgesetzt ist, was sich nachteilig auf die spätere Kühlung und Weiterverarbeitung auswirkt. Zudem bewirken diese Flammen Defekte auf der Glasoberseite, die zu einer Qualitätsverminderung und zu erhöhtem Ausschuss führen können.

Die Aufgabe der Erfindung besteht daher darin, eine Vorrichtung zur Herstellung von Flachglas nach dem Floatverfahren zu finden, bei der die bekannten Dichtungseinrichtungen am Austrittsende des Floatbades so gestaltet sind, dass der Kontakt der ausbrennenden Gase mit der Oberfläche des Glasbandes weitgehend vermieden wird.

Diese Aufgabe wird durch die in den Patentansprüchen beschriebene Vorrichtung sowie die Dichtungsanordnung gelöst.

Gemäß der Erfindung ist die in Laufrichtung des Glasbandes letzte Spalt-Dichtung gasaustrittsseitig mit einer konvexen Oberfläche versehen. An dieser Oberfläche bildet sich der sogenannte Coandaeffekt aus. Der Coandaeffekt bewirkt, dass der aus dem Floatbad durch den Dichtungsspalt austretende Gasstrom der gekrümmten konvexen Oberfläche folgt und gezielt von der Glasoberfläche weggeleitet wird. Damit brennt nicht mehr ein das Glasband überstreichender Gasstrom sondern ein vom Glasband weggeleiteter Gasstrom; das Glas wird vor unerwünschter Erwärmung und Beeinträchtigungen durch direkte Beaufschlagung mit einer Flamme weitgehend geschützt. Die letzte Spaltdichtung ist diejenige, durch die das Gas aus der Floatkammer mit der (Außen-)Atmosphäre in Kontakt tritt. Unter Atmosphäre bzw. Außenatmosphäre wird diejenige Atmosphäre verstanden, deren Sauerstoffgehalt groß genug ist, um mit den durch die Dichtung nach außen dringenden Gasen eine Flamme ausbilden zu können.

Die Größe des Spaltes, d. h. der Abstand zwischen der Unterkante der Spaltdichtung und der Oberfläche des Glasbandes beträgt mindestens 2 mm, bevorzugt wird jedoch ein Abstand von 4 bis 20 mm. Sehr gute Ergebnisse erzielt man mit Abständen von 5 bis 10 mm. Ein Abstand von mehr als 40 mm sollte aus ökonomischen Gründen wegen des hohen Gasverbrauches an Floatbadatmosphäre vermieden werden.

Der Coandaeffekt kommt besonders gut zur Geltung, wenn die konvexe Oberfläche eine Krümmung mit einem Radius r besitzt, der mindestens dem Zweifachen, bevorzugt mindestens dem Dreifachen des Abstandes x zwischen der Unterkante der Spaltdichtung und der Oberfläche des Glasbandes entspricht. Der Radius r sollte im allgemeinen nicht das Zehnfache des Abstandes x überschreiten, weil darüber hinaus das Bauvolumen für die konvexe Oberfläche zu groß wird und zu geometrischen Behinderungen in diesem sehr engen Bauraum führt. Weiterhin ergibt sich bei Überschreitung dieses Wertes auch eine hohe Masse des Bauteils, was wiederum aufwendige und teure Konstruktionen für die Halterung und Höhenverstellung der Vorrichtung bedeutet. Bevorzugt überschreitet der der Radius r nicht 250 mm, besonders bevorzugt nicht 100 mm.

Die Stärke der Auslenkung des Gasstroms aus seiner ursprünglichen Richtung entlang der Glasbandoberseite durch den Coandaeffekt hängt von der herrschenden Gasgeschwindigkeit ab. Prinzipiell tritt der Effekt bei jeder Strömungsgeschwindigkeit auf; der Ablenkungswinkel ist jedoch umso größer, je höher die Gasgeschwindigkeiten sind. Hohe Gasgeschwindigkeiten im Austrittsspalt treten vor allem dann auf, wenn der Austrittsspalt zwischen Glasband und Unterkante der Spaltdichtung möglichst klein gehalten wird. Hohe Gasgeschwindigkeiten erzeugen bei konventionellen Dichtungen eine weit über das Glasband streichende Flamme und sind daher nicht erwünscht. Das erfindungsgemäße Verfahren leitet dagegen bei hohen Gasgeschwindigkeiten die Flamme besonders wirkungsvoll von der Glasoberfläche weg.

Zwecks Erhöhung der Gasgeschwindigkeit kann es auch vorteilhaft sein, zwischen der Glasoberfläche und der konvexen Oberfläche, d.h. normalerweise im Austrittsspalt, eine Gaszuführeinrichtung, insbesondere eine Düse anzuordnen, durch die ein in Ziehrichtung des Glasbandes ausströmender zusätzlicher Gasstrom geleitet wird. Die Gasdüse kann als Breitschlitzdüse ausgeführt sein, es können aber auch eine Reihe von Einzeldüsen zur Anwendung gelangen.

Die Spaltdichtung kann an ihrem unteren Ende auch aus mehreren Lamellen bestehen, also eine an sich bekannte Labyrinthdichtung sein, wobei die in Laufrichtung des Glasbandes gesehen letzte Lamelle mit einer konvexen Oberfläche versehen ist.

Die Erfindung und weitere Ausgestaltungsmöglichkeiten werden anhand der Abbildung weiter erläutert.

Es zeigen
- Fig. 1: schematisch eine Floatglasanlage
- Fig. 2: einen Vorhang ("drape") mit einer Spaltdichtung, die gasaustrittsseitig mit einer konvexen Oberfläche versehen ist.
- Fig. 3: einen Vorhang ähnlich Fig. 2., jedoch mit zusätzlicher Gaszufuhreinrichtung.
- Fig. 4: eine Labyrinthdichtung
- Fig. 5: eine Labyrinthdichtung mit zusätzlicher Gaszuführung
- Fig. 6: Vorhang mit Entlastungsöffnung und Labyrinthdichtung

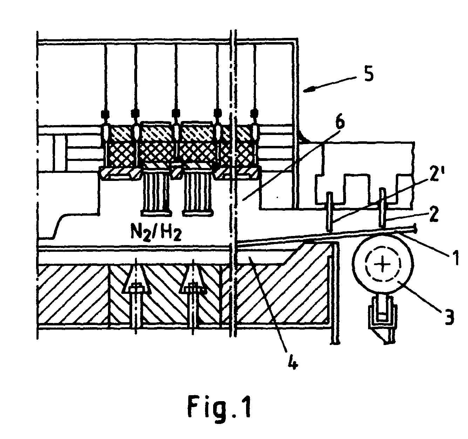

Fig. 1 zeigt das Austrittsende einer herkömmlichen Floatwanne 5. Das Glasband 1 ist bereits von dem Zinnbad 4 abgehoben und wird mittels der Transporteinrichtung 3 aus der Floatwanne 5 abgezogen. Zum Schutz des Zinnbades 4 besteht die Wannenatmosphäre 6 in der Floatwanne 5 aus einer Mischung aus N₂ und H₂, die gegenüber der Außenatmosphäre unter leichtem Überdruck (ca. 1 bis 20 Pa) gehalten wird. Oberhalb des Glasbandes 1 sind im dargestellten Fall zwei Vorhänge ("drapes") 2, 2' angeordnet, die das Eindringen von Luft in die Floatglasatmosphäre verhindern. Da die Vorhänge 2, 2' das Glasband nicht berühren dürfen, besteht zwischen den Vorhängen 2, 2' und dem Glasband 1 jeweils ein Spalt, durch den infolge des Überdrucks in der Floatwanne 5 ein Strom der Wannenatmosphäre 6 austritt. Der unter dem Vorhang 2 austretende Gasstrom hat Kontakt mit der sauerstoffhaltigen Außenatmosphäre und entzündet sich. Die entstehende Flamme wirkt auf das Glasband 1 ein und kann die eingangs beschriebenen Fehler verursachen.

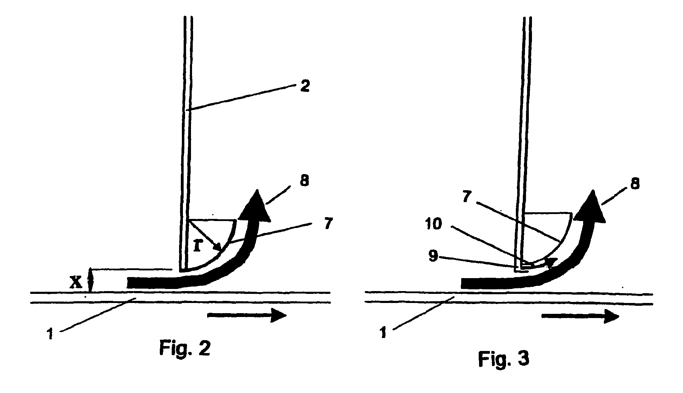

Fig. 2 zeigt den Vorhang 2, der gasaustrittseitig mit einer konvexen Oberfläche 7 versehen ist. Der durch den zwischen Vorhang ("drape") 2 und dem in Pfeilrichtung von links nach rechts laufenden Glasband 1 bestehenden Spalt hindurchtretende Gasstrom 8 wird durch den an der konvexen Oberfläche 7 sich ausbildenden Coandaeffekt nach oben von der Glasoberfläche 1 abgeleitet. Die konvexe Oberfläche 7 hat die Form eines Zylindersegments. Das Zylindersegment kann neben der dargestellten Form eines Viertelzylinders auch die Form eines Halbzylinders haben. Selbstverständlich kann die konvexe Oberfläche auch andere Formen besitzen, z.B. ein Segment eines parabolischen oder elliptischen Zylinders oder eine andere, gekrümmte Oberfläche sein, sofern die Krümmung geeignet ist, den Gasstrom von der Glasoberfläche wegzulenken.

Fig. 3 zeigt einen Vorhang analog Fig. 2, bei dem jedoch am unteren Ende mittels einer Düse 9 ein Zusatzgasstrom 10 zugeführt wird. Das Gas kann ein Inertgas, z.B. Stickstoff sein. Da der Coandaeffekt sich bei höheren Gasgeschwindigkeiten besser ausbildet, wird mittels des Zusatzgasstromes 10 der aus der Floateinrichtung austretende Gasstrom 8 beschleunigt, so dass er sich besser an die konvexe Oberfläche 7 anlegt. Dabei ist es von Vorteil, wenn der aus der Düse 9 austretende Zusatzgasstrom 10 eine Geschwindigkeit von 1 bis 25 m·s⁻¹ besitzt. Höhere Geschwindigkeiten sind wegen der Kosten für den Zusatzgasstrom im allgemeinen unerwünscht. Eine Beschleunigung des aus der Spaltdichtung austretenden Gasstroms ist immer dann von Vorteil, wenn die Flamme nicht ausreichend von dem Glasband weggelenkt wird. Das kann z. B. durch eine visuelle Beobachtung der Flamme erkannt werden.

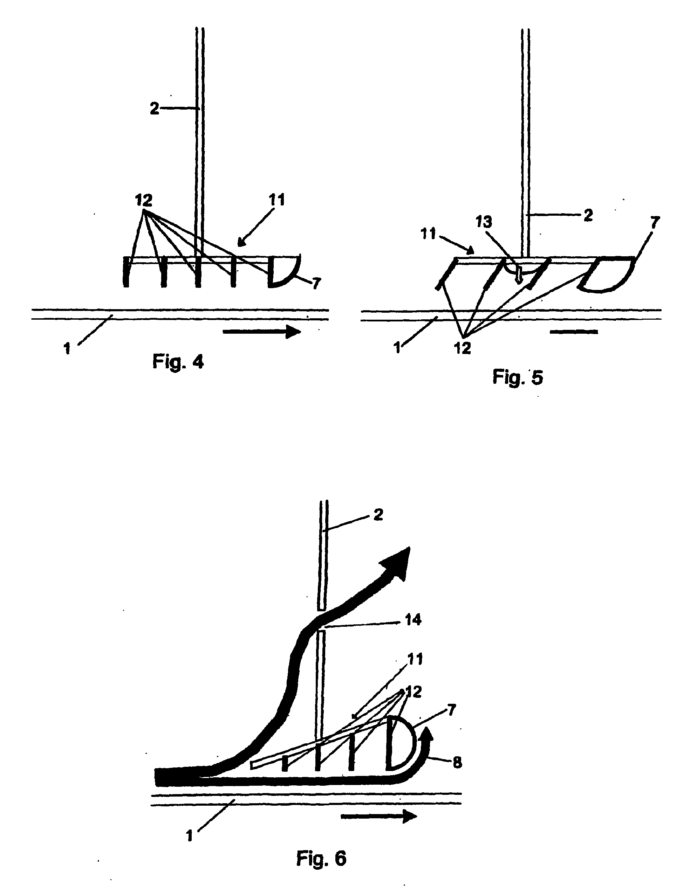

Fig. 4 zeigt einen Vorhang, der an seinem unteren Ende mit einer Labyrinthdichtung 11 versehen ist. Die Labyrinthdichtung 11 besitzt fünf Lamellen 12. Es wird bevorzugt, wenn die Gesamtlänge der Labyrinthdichtung (in Laufrichtung des Glasbandes gesehen) kleiner als 300 mm ist, um sie in dem vorhandenen Bauraum unterbringen zu können. Bevorzugt werden Baulängen zwischen 50 und 150 mm. Der Abstand der Lamellen zueinander sollte zwischen 10 und 150 mm liegen, bevorzugt 20 bis 50 und besonders bevorzugt 30 bis 40 mm. Die Höhe der einzelnen Lamellen sollte zwischen 5 und 100 mm, bevorzugt zwischen 10 und 30 mm liegen. Die Dicke der Lamellen liegt zwischen 0,5 und 30 mm. Die Labyrinthdichtung kann aus 2 bis 10 Lamellen bestehen, es wird jedoch bevorzugt, wenn sie 3 bis 5 Lamellen besitzt. Die Lamellen können unterschiedliche Höhen besitzen, wobei die Höhen bevorzugt in Laufrichtung des Glasbandes ansteigen (vergl. Fig. 6). Natürlich ist es auch möglich, dass die Lamellen alle die gleiche Höhe besitzen, wie in Fig. 4 dargestellt. Weiterhin ist es auch möglich, zwischen den Lamellen ein gegenüber der Badatmosphäre inertes Schutzgas mittels einer Düsenanordnung 13 zuzuführen, wie das in Fig. 5 gezeigt ist. Mittels dieses Schutzgases kann ein Gegendruck zu der Wannenatmosphäre erzeugt werden, so dass weniger Gas aus dem Floatbad in die Umgebung austritt. Dabei wird bevorzugt, wenn das Schutzgas vorgeheizt wird, beispielsweise auf Temperaturen zwischen 400 und 700°C, um eine unerwünschte Kühlung des Glases in diesem Bereich zu vermeiden. Bevorzugt wird vorgeheizter Stickstoff verwendet. Die Lamellen können gegenüber der Senkrechten in einem Winkel angeordnet sein, der bevorzugt bis zu 45 Grad beträgt. Der Winkel sollte bevorzugt so gerichtet sein, dass die Lamellen gegen die Laufrichtung des Glasbandes und damit gegen die aus dem Floatbad entweichende Gasströmung zeigen. Durch die Neigung wird der austretende Gasstrom durch zusätzliche Wirbelbildung weiter verlangsamt und in seiner Menge reduziert.

Selbstverständlich können auch die übrigen, vor dem letzten (in Bandlaufrichtung gesehen) Vorhang ("drape") angeordneten Vorhänge Labyrinth-Dichtungen und austrittsseitige gekrümmte Flächen zur Erhöhung des Strömungswiderstandes und damit der Abdichtwirkung besitzen.

Es hat sich ferner als vorteilhaft erwiesen, wenn der letzte Vorhang 2, wie in Fig. 6 gezeigt, mit einer oder mehrerer Entlastungsöffnungen 14 versehen ist, durch die ein Teil der Floatbadatmosphäre, die die vorhergehenden Dichtungen durchströmt hat, abziehen kann. Durch diese Maßnahme wird der über dem Glasband austretende Gasstrom 8 und damit verbunden die Wärmebelastung des Glasbandes weiter verringert. Die erforderliche Querschnittsfläche für die Öffnung 14 hängt von den individuellen Verhältnissen wie Floatbadgröße, Druck in der Floatkammer, Dichtwirkung der vorangehenden Vorhänge bzw. Labyrinthdichtungen usw. ab und kann von einem Fachmann unschwer ermittelt werden.

Wenn die konvexe Oberfläche Teil eines hohlen Zylindersegments ist, wie z.B. in den Abbildungen gezeigt, kann die konvexe Oberfläche 7 mit Bohrungen versehen werden, durch die mittels eines in dem hohlen Zylindersegment erzeugten Unterdrucks Teile des Gasstromes 8 in das Innere des Zylindersegments gesaugt werden. Hierdurch werden an der Grenzfläche zwischen der konvexen Oberfläche 7 und dem Gasstrom 8 entstehende Gaswirbel abgesaugt (Grenzflächenabsaugung) und es entsteht ein besonders guter laminarer Gasstrom.

Die Erfindung ermöglicht es erstmals, den unter dem letzten Vorhang ("drape") in die Umgebung austretenden Gasstrom und damit die dort durch Eintritt in die sauerstoffhaltige Atmosphäre entstehende Flamme gezielt nach oben abzuleiten, so dass die thermische Belastung des Glasbandes durch die Flamme erheblich reduziert wird. Insbesondere empfindliche und dünne Gläser profitieren von dieser Erfindung. Dies gilt in besonderem Maße für Gläser für Display- und Flachbildschirmanwendungen, da dadurch eine ungleichmäßige Kühlung der Glasscheiben und Oberflächendefekte bereits bei der Herstellung weitestgehend vermeidbar sind, so dass nachfolgende teure Wärmebehandlungs-, Reinigungs- und Polierschritte verringert oder sogar ganz eingespart werden können.

## Patentansprüche

1. Vorrichtung zur Herstellung von Flachglas nach dem Floatverfahren mit einer Floatkammer und mehreren hintereinander angeordneten Spaltdichtungen (2, 2'), **dadurch gekennzeichnet, dass** die an der Glasaustrittsseite angeordnete, in Laufrichtung des Bandes gesehen letzte Spaltdichtung eine Spaltgröße von mindestens 2 mm besitzt und gasaustrittsseitig mit einer konvexen Oberfläche (7) versehen ist, durch die der aus dem Dichtungsspalt austretende Gasstrom (8) gezielt mittels des Coandaeffekts von der Oberfläche des Glasbandes weggelenkt wird.

2. Vorrichtung nach Anspruch 1, **dadurch gekennzeichnet, dass** die Spaltgröße 4 bis 20 mm beträgt.

3. Vorrichtung nach Anspruch 1 oder 2, **dadurch gekennzeichnet, dass** die Spaltgröße 5 bis 10 mm beträgt.

4. Vorrichtung nach einem der Ansprüche 1 bis 3, **dadurch gekennzeichnet, dass** die konvexe Oberfläche (7) eine Krümmung mit einem Radius r besitzt, der mindestens dem zweifachen, insbesondere mindestens dem dreifachen Abstand zwischen der Unterkante der Spaltdichtung und der Oberfläche des Glasbandes entspricht.

5. Vorrichtung nach einem der Ansprüche 1 bis 4, **dadurch gekennzeichnet, dass** die konvexe Oberfläche einen Radius von nicht mehr als 250 mm, insbesondere von nicht mehr als 100 mm besitzt.

6. Vorrichtung nach einem oder mehreren der Ansprüche 1 bis 5, **dadurch gekennzeichnet, dass** zwecks Erhöhung der Gasströmungsgeschwindigkeit auf der konvexen Oberfläche (7) zwischen der Glasoberfläche und der konvexen Oberfläche eine Gaszufuhreinrichtung (9) angeordnet ist, durch die ein in Richtung der konvexen Oberfläche ausströmender Gasstrom (10) geleitet wird.

7. Vorrichtung nach einem oder mehreren der Ansprüche 1 bis 6, **dadurch gekennzeichnet, dass** die Spaltdichtung (2) aus einer Labyrinthdichtung (11) mit mehreren Lamellen (12) besteht, von denen die in Gasströmungsrichtung letzte mit der konvexen Oberfläche (7) versehen ist.

8. Vorrichtung nach Anspruch 7, **dadurch gekennzeichnet, dass** zwischen zwei Lamellen (12) eine Gaszufuhreinrichtung (13) vorgesehen ist.

9. Vorrichtung nach Anspruch 7 oder 8, **dadurch gekennzeichnet, dass** der in Strömungsrichtung letzte Vorhang (2) mit mindestens einer Entlastungsöffnung (14) versehen ist und an seinem unteren Ende mit einer Labyrinthdichtung (11) bestehend aus 2 bis 10 Lamellen (12) versehen ist, deren Höhe in Laufrichtung des Glasbandes (1) gesehen ansteigt.

## Claims

1. Device for the production of flat glass by the float method, with a float chamber and with a plurality of gap seals (2, 2') arranged one behind the other, **characterized in that** the last gap seal arranged on the glass outflow side, as seen in the running direction of the ribbon, possesses a gap size of at least 2 mm and is provided on the gas outflow side with a convex surface (7) by which the gas stream (8) flowing out from the sealing gap is deflected away from the surface of the glass ribbon in a directed manner by means of the Coanda effect.

2. Device according to Claim 1, **characterized in that** the gap size is 4 to 20 mm.

3. Device according to Claim 1 or 2, **characterized in that** the gap size is 5 to 10 mm.

4. Device according to one of Claims 1 to 3, **characterized in that** the convex surface (7) possesses a curvature with a radius r which corresponds at least to double, in particular at least to triple the distance between the lower edge of the gap seal and the surface of the glass ribbon.

5. Device according to one of Claims 1 to 4, **characterized in that** the convex surface possesses a radius of no more than 250 mm, in particular of no more than 100 mm.

6. Device according to one or more of Claims 1 to 5, **characterized in that**, for the purpose of increasing the gas flow velocity on the convex surface (7), there is arranged between the glass surface and the convex surface a gas supply means (9) through which is conducted a gas stream (10) flowing out in the direction of the convex surface.

7. Device according to one or more of Claims 1 to 6, **characterized in that** the gap seal (2) consists of a labyrinth seal (11) with a plurality of lamellae (12), of which the last in the gas flow direction is provided with the convex surface (7).

8. Device according to Claim 7, **characterized in that** a gas supply means (13) is provided between two lamellae (12).

9. Device according to Claim 7 or 8, **characterized in that** the last curtain (2) in the flow direction is provided with at least one relief orifice (14) and at its lower end is provided with a labyrinth seal (11) consisting of 2 to 10 lamellae (12), the height of which increases, as seen in the running direction of the glass ribbon (1).

## Revendications

1. Dispositif en vue de la fabrication de verre plat conformément au procédé de flottaison avec une chambre de flottaison et plusieurs joints d'étanchéité à fentes disposés les uns derrière les autres (2, 2'), **caractérisé en ce que** le dernier joint d'étanchéité à fentes, vu dans la direction de déplacement de la bande, disposé du côté de la sortie du verre, possède une taille de fente d'au moins 2 mm et est pourvu, du côté de la sortie du gaz, d'une surface convexe (7) à travers laquelle le courant gazeux (8) sortant de la fente d'étanchéité est dévié d'une manière ciblée à l'écart de la surface de la bande de verre par l'intermédiaire de l'effet Coanda.

2. Dispositif selon la revendication 1, **caractérisé en ce que** la taille de la fente est de 4 à 20 mm.

3. Dispositif selon la revendication 1 ou 2, **caractérisé en ce que** la taille de la fente est de 5 à 10 mm.

4. Dispositif selon l'une quelconque des revendications 1 à 3, **caractérisé en ce que** la surface convexe (7) possède une courbure ayant un rayon r, qui correspond au moins à l'écart double, en particulier au moins à l'écart triple entre l'arête inférieure du joint d'étanchéité à fentes et la surface de la bande de verre.

5. Dispositif selon l'une quelconque des revendications 1 à 4, **caractérisé en ce que** la surface convexe possède un rayon d'au plus 250 mm, en particulier d'au plus 100 mm.

6. Dispositif selon l'une quelconque des revendications 1 à 5, **caractérisé en ce que**, dans l'optique de l'augmentation de la vitesse d'écoulement du gaz sur la surface convexe (7) entre la surface du verre et la surface convexe, on dispose un équipement d'apport de gaz (9), à travers lequel on conduit un courant gazeux s'échappant en direction de la surface convexe.

7. Dispositif selon l'une quelconque des revendications 1 à 6, **caractérisé en ce que** le joint d'étanchéité à fentes (2) se compose d'un joint d'étanchéité à labyrinthe (11), ayant plusieurs lamelles (12), dont la dernière en direction de l'écoulement de gaz est pourvue d'une surface convexe (7).

8. Dispositif selon la revendication 7, **caractérisé en ce que** l'on prévoit, entre deux lamelles (12), un équipement d'apport de gaz (13).

9. Dispositif selon la revendication 7 ou 8, **caractérisé en ce que** le dernier rideau (2) dans la direction d'écoulement est pourvu d'au moins une ouverture de détente (14) et est pourvue à son extrémité inférieure d'un joint d'étanchéité à labyrinthe (11), se composant de 2 à 10 lamelles (12), dont la hauteur augmente lorsque l'on regarde dans la direction de déplacement de la bande de verre (1).
